# FASCICULE DE BREVET EUROPEEN

(11) **EP 3 386 741 B1**
(45) Date de publication et mention de la délivrance du brevet: **21.04.2021**
(21) Numéro de dépôt: 16819619.4
(22) Date de dépôt: 08.12.2016
(51) Int. Cl.: B29C 33/26, B29D 30/06, B30B 11/00, B29C 33/48

(54) **PRESSE DE CUISSON D'UNE ÉBAUCHE DE PNEUMATIQUE**
VULKANISIERUNGSPRESSE FÜR EINEN REIFENROHLING
CURING PRESS FOR A TYRE BLANK

(30) Priorité: 10.12.2015 FR 1562155
(43) Date de publication de la demande: 17.10.2018
(73) Titulaire: Compagnie Générale des Etablissements Michelin, 63000 Clermont-Ferrand (FR)
(72) Inventeur: MASSOPTIER-DAVID, Michaël, 63040 Clermont-Ferrand Cedex 9 (FR); APERCE, Jean-Claude, 63040 Clermont-Ferrand Cedex 9 (FR)
(74) Mandataire: Roussy, Delphine
(86) Numéro de dépôt international: PCT/FR2016/053268
(87) Numéro de publication internationale: WO 2017/098159

(56) Documents cités:
- DE-A1- 1 805 178
- DE-A1- 2 303 742
- FR-A1- 2 213 850
- FR-A1- 2 998 830

## Description

L'invention concerne la fabrication des pneumatiques et en particulier les moules de cuisson de l'ébauche du pneumatique. Elle concerne en particulier les pneumatiques pour des engins de génie civil tels que ceux utilisés dans les mines.

On connaît du document WO 2011/001095 aux noms des demanderesses un moule de cuisson d'une ébauche de pneumatique comprenant des coquilles supérieure et inférieure mobiles à coulissement en direction l'une de l'autre et servant à mouler les flancs du pneumatique, ainsi que des secteurs latéraux mobiles en direction radiale à l'axe du moule et servant à mouler la bande de roulement. Lors de l'ouverture du moule, le coulissement vers le haut du plateau portant la coquille inférieure entraîne le coulissement radial des secteurs par rapport à la coquille afin de libérer le pneumatique. À cette fin, à chaque secteur est associé un levier articulé au secteur, relié au bâti du moule et en appui sur une rampe du plateau formant une face orientée en direction de l'axe. Le mouvement de coulissement radial des secteurs facilite le démoulage des sculptures de la bande de roulement.

La fabrication des pneumatiques d'engins de génie civil soulève des problèmes particuliers. En effet, ces pneumatiques sont de très grandes dimensions. De plus, dans les modèles récents, ils comprennent sur leur bande de roulement un grand nombre de rainures relativement fines et profondes qui peuvent avoir une forme complexe (par exemple une forme ondulée, une forme en crochet, etc.) qui rendent plus délicat le démoulage. Il faut donc disposer d'un mécanisme qui permette de faire reculer les secteurs sur une course plus importante au cours d'un mouvement de coulissement ou d'un mouvement qui soit proche d'un mouvement de coulissement.

Un but de l'invention est donc de faciliter le moulage et le démoulage de ce type de pneumatique. En outre, le préambule de la revendication 1 est connu du document FR 2 998 830 A1.

À cet effet, on prévoit selon l'invention une presse de cuisson selon la revendication 1.

Ainsi, grâce à l'appui direct des secteurs sur le bâti, ce nouveau type de mécanisme offre des possibilités inédites pour assurer le recul des secteurs lors du démoulage. On peut en particulier donner à ce recul une grande amplitude avant que les secteurs connaissent un basculement ou un basculement important. On peut donc notamment assurer le démoulage de bandes de roulement de pneumatiques de grandes dimensions présentant de nombreuses rainures fines, profondes et de forme complexe telles que les sculptures des pneumatiques de génie civil.

De préférence, chaque rampe est agencée pour faire coulisser l'un des secteurs par rapport au plateau inférieur sous l'effet du coulissement du plateau inférieur.

En effet, c'est le recul des secteurs au moyen d'un coulissement qui est préférable. Et le mécanisme de l'invention permet d'assurer ce recul sur une grande amplitude afin de démouler convenablement les sculptures.

Avantageusement, chaque rampe est agencée pour faire basculer l'un des secteurs par rapport au plateau inférieur à l'issue du coulissement des secteurs.

En effet, ce basculement est utile pour faciliter l'extraction du pneumatique qui vient d'être vulcanisé dans le moule. Ce basculement a lieu une fois que chaque secteur a été entièrement dégagé des sculptures de la bande de roulement. De plus, dans une presse classique, il peut arriver que, au début de l'éloignement des secteurs, ceux-ci soient retenus élastiquement par la gomme du pneumatique. Pour y pallier, ce mouvement de basculement permet d'assurer une bonne séparation du secteur à l'égard de la bande de roulement.

De préférence, la presse est agencée de sorte que chaque secteur est en appui contre un bord du plateau inférieur lors d'une descente du plateau inférieur.

Ainsi, le plateau accompagne le mouvement de chaque secteur lors de la descente de celui-ci. Dans le cas contraire, il pourrait se produire une chute du secteur, notamment lors de son basculement en retour en direction de la presse, et un choc du secteur contre le plateau. Un tel choc des secteurs génère beaucoup de bruit dans l'environnement de la presse et est susceptible d'abîmer ces organes. L'accompagnement précité évite ces problèmes.

On peut prévoir que la rampe est agencée de sorte que chaque secteur est en appui direct sur l'une des rampes lors d'une descente du plateau inférieur.

Dans un mode de réalisation, chaque rampe présente un tronçon rectiligne horizontal et un tronçon incliné prolongeant le tronçon horizontal vers le bas en direction de l'extérieur de la presse.

Le tronçon horizontal contribue au coulissement du secteur correspondant et le tronçon incliné à son basculement.

Le bâti comprend des rampes et chaque secteur est apte à être en appui à la fois contre une des rampes du plateau inférieur et une des rampes du bâti.

Ainsi, ce sont les deux rampes qui coopèrent pour provoquer le recul de chaque secteur. Le mouvement de ce dernier se trouve donc étroitement contrôlé.

Avantageusement, chaque secteur est apte à être en appui direct contre l'une des rampes du bâti.

On peut prévoir que chaque rampe du bâti est incurvée et/ou concave.

C'est en effet la forme de la rampe qui détermine la vitesse du secteur associé et la variation de cette vitesse lors du recul. Une forme concave fournit une vitesse de recul relativement basse au début du mouvement du secteur pour faciliter la séparation de ce dernier avec les sculptures. Elle augmente ensuite la vitesse du secteur lorsque celui-ci est séparé de la bande de roulement. Cette augmentation est constante compte-tenu de la forme incurvée concave. De même, la forme de la rampe donne une variation de l'effort appliqué : plus on se rapproche de la verticale, plus l'effort est important ; on peut par exemple fournir plus d'effort en début de démoulage.

On peut prévoir que, chaque rampe du bâti étant une rampe supérieure, le bâti comprend en outre des rampes inférieures contre lesquelles les secteurs sont aptes à être en appui respectivement..

Ainsi chaque secteur peut quitter temporairement la rampe du plateau pour venir en appui sur la rampe du bâti.

Dans un mode de réalisation, chaque secteur est retenu prisonnier dans une ouverture du bâti délimitée par une ou plusieurs des rampes.

Ainsi, en cas de mouvements incontrôlés du secteur dans des circonstances imprévues, celui-ci ne peut pas s'échapper ni être projeté dans l'environnement de la presse.

Nous allons maintenant décrire un mode de réalisation de la presse selon l'invention en référence aux dessins annexés sur lesquels:
- la figure 1 est une vue en coupe axiale verticale d'une presse selon un mode de réalisation de l'invention, sur laquelle un seul des secteurs est illustré ;
- les figures 2 à 12 sont des vues partielles de la presse de la figure 1 au cours d'étapes successives d'un cycle de cuisson d'une ébauche de pneumatique, et
- les figures 13 à 15 sont des vues en perspective du mécanisme d'actionnement de chaque secteur de la presse de la figure 1.

Nous allons décrire en référence aux figures une presse selon un mode de réalisation de l'invention. Cette presse sert à la cuisson et à la mise en forme d'ébauchesde pneumatique de roue. Il peut s'agir d'une roue de véhicule tel qu'un véhicule utilitaire, un véhicule de tourisme ou un véhicule de type poids-lourd. En l'espèce, il s'agit d'une presse pour des pneumatiques d'engins de génie civil tels que ceux utilisés dans les mines.

La presse 2 comprend un bâti 4 formant un socle du moule, supposé immobile et fixé sur le sol dans la suite.

La presse présente une forme générale à symétrie de révolution autour de son axe vertical 6.

Elle comprend un plateau inférieur horizontal 8 portant une coquille 10 rigidement fixée au plateau 8, sur celui-ci. Le plateau 8 est monté mobile à coulissement vertical suivant l'axe 6 par rapport au bâti 4. La presse comprend à cette fin des moyens de guidage et de motorisation qui sont classiques et ne sont pas détaillés ici.

De même, la presse comprend un plateau supérieur horizontal 12 auquel est rigidement fixée une coquille supérieure 14 sous le plateau, le plateau 12 étant monté mobile à coulissement vertical suivant l'axe 6 par rapport au bâti 4, ici encore par des moyens de guidage et de motorisation qui ne sont pas détaillés. Afin de permettre l'ouverture du moule, le plateau supérieur 12 coulisse indépendamment du plateau inférieur 10.

La presse comprend également des secteurs latéraux 16 qui s'étendent en périphérie de la presse. Bien qu'un seul secteur ait été illustré sur les figures, la presse en comprend plusieurs, par exemple entre 10 et 20. Ces secteurs sont uniformément répartis autour de l'axe vertical 6, sur la circonférence de la presse. Ils sont identiques entre eux. Le mécanisme que nous allons décrire et qui est associé à chaque secteur est identique pour tous les secteurs circonférentiels.

Les coquilles 10, 14 et les secteurs 16 forment tous ensemble un moule de cuisson pour l'ébauche. Les coquilles servent principalement à former les flancs latéraux respectifs 20 du pneumatique 18 tandis que les secteurs 16 forment sa bande de roulement 22 comprenant notamment des sculptures 24 parmi lesquelles se trouvent des rainures fines, profondes et/ou de formes complexes. Lors du moulage et de la cuisson, les coquilles et les secteurs forment une enceinte fermée pouvant être mise sous pression et chauffée pour réaliser la vulcanisation de la gomme de l'ébauche en vue de produire le pneumatique. Les moyens de chauffage et de mise sous pression sont classiques et ne seront pas décrits ici.

Pour chaque secteur circonférentiel, le plateau inférieur 8 présente une chape 26 formant un prolongement radial du plateau et de la coquille en direction opposée à l'axe 6. Le plateau inférieur 8, la coquille inférieure 10 et les chapes 26 forment tous ensemble un solide rigide.

De même, pour chaque secteur, le bâti 4 comprend une cale 28 rigidement fixée à une base du bâti et s'étendant en saillie d'une face supérieure de cette dernière, près de son bord périphérique. Le bâti et ses cales 28 forment eux aussi tous ensemble un solide rigide.

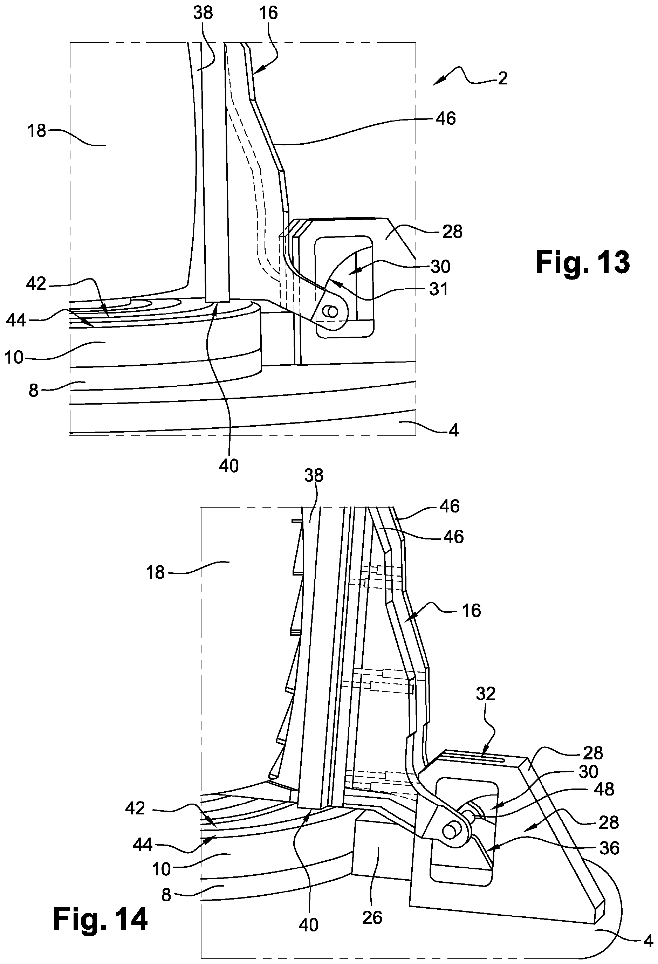

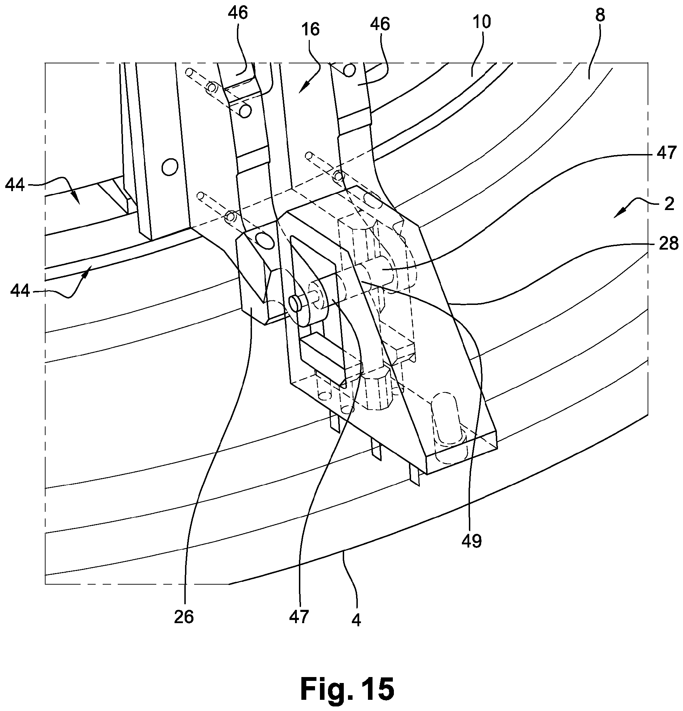

Comme on le voit en particulier sur les figures 13 à 15, la cale 28 présente une forme générale plate et est orientée de sorte que son épaisseur est mesurée dans un plan perpendiculaire à un plan radial à l'axe 6. Elle présente une large ouverture traversante 30 présentant un contour fermé. Sur chaque face, le bord supérieur 31 de l'ouverture a une forme incurvée concave orientée en direction opposée à l'axe 6 et vers le bas, le centre de courbure se trouvant du côté de l'ouverture. Ce bord forme une rampe 31. L'ouverture 30 présente en outre deux bords avant et arrière verticaux et un bord inférieur horizontal formant un limiteur, tous trois rectilignes. Ces trois bords ainsi que la rampe 31 forment un contour fermé. Cette ouverture 30 est accessible sur chacune des faces principales de la cale. La cale présente en outre une fente radiale 32 s'étendant suivant son plan médian dans une partie de la cale, à partir d'un côté de la cale dirigé vers l'axe 6 et jusque dans l'ouverture 30, dédoublant ainsi cette dernière.

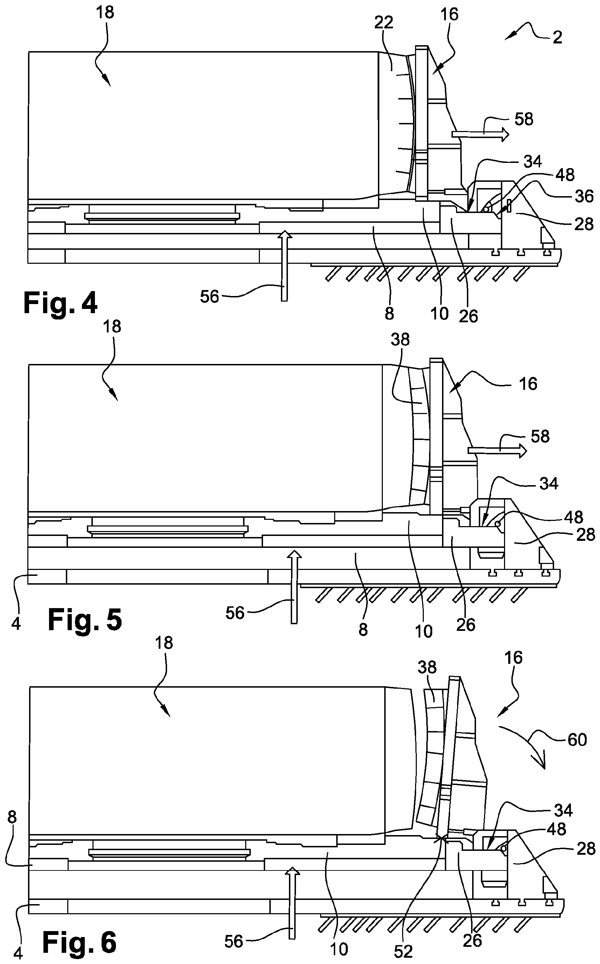

La chape 26 pénètre dans la fente 32 pour être visible à travers l'ouverture 30. Elle présente un bord supérieur rectiligne horizontal 34 notamment représenté à la figure 6. Une partie de ce bord s'étendant dans l'ouverture 30 forme un premier tronçon d'une rampe. La chape présente en outre un bord avant rectiligne 36 incliné en direction opposée à l'axe 6 et vers le haut, et prolongeant le bord supérieur 34 d'un côté opposé à l'axe 6. Ce bord 36 s'étend à l'intérieur de l'ouverture 30 et forme un deuxième tronçon de la rampe. Comme le plateau et la coquille inférieurs sont montés mobiles à coulissement vertical par rapport au bâti, cette rampe 34, 36 est montée mobile à coulissement vertical par rapport à la cale.

Chaque secteur 16 présente une partie moulante 38 s'étendant suivant la direction verticale et orientée en direction de l'axe 6. Le secteur présente une face inférieure plane 40 apte à reposer sur une face supérieure 42 de la coquille inférieure ou sur un bord 44 de celle-ci.

En partie arrière, du côté opposé à l'axe 6, le secteur comprend deux platines verticales 46 fixées à la partie moulante par leur bord dirigé vers l'axe, parallèles l'une à l'autre et distantes l'une de l'autre, les platines étant symétriques l'une de l'autre par rapport à un plan radial à l'axe 6. Les deux platines 46 recouvrent partiellement les faces principales respectives de la cale 28 et sont reliées l'une à l'autre à travers l'ouverture 30 au moyen d'un suiveur 48. Ce dernier comprend un galet central 49 et deux sabots 47 entre lesquels se trouve le galet. Le galet et les sabots sont montés libre en rotation sur un arbre commun perpendiculaire au plan de l'ouverture 30. Mis à part ces trois éléments montés rotatifs par rapport aux platines, l'ensemble du secteur avec notamment les parties moulantes 38 et les platines 46 forme un solide rigide. Le secteur est retenu prisonnier dans l'ouverture 30, cette dernière étant fermée dans un plan radial à l'axe principal 6. Le suiveur 48 est donc apte à venir en contact direct avec chacun des bords de l'ouverture 30 de la cale 28, notamment la rampe 31, et avec la rampe 34, 36 de la chape. Plus précisément, le galet est apte à venir en contact avec la chape tandis que les sabots sont aptes à venir en contact avec la rampe 31 de chaque côté de l'ouverture, ainsi qu'avec son grand bord vertical et son bord inférieur. Les sabots ont des dimensions plus grandes que le galet afin d'augmenter leur surface de contact avec la cale et de diminuer les contraintes dues à la pression de contact (pression de Hertz) d'un axe sur le profil de la cale.

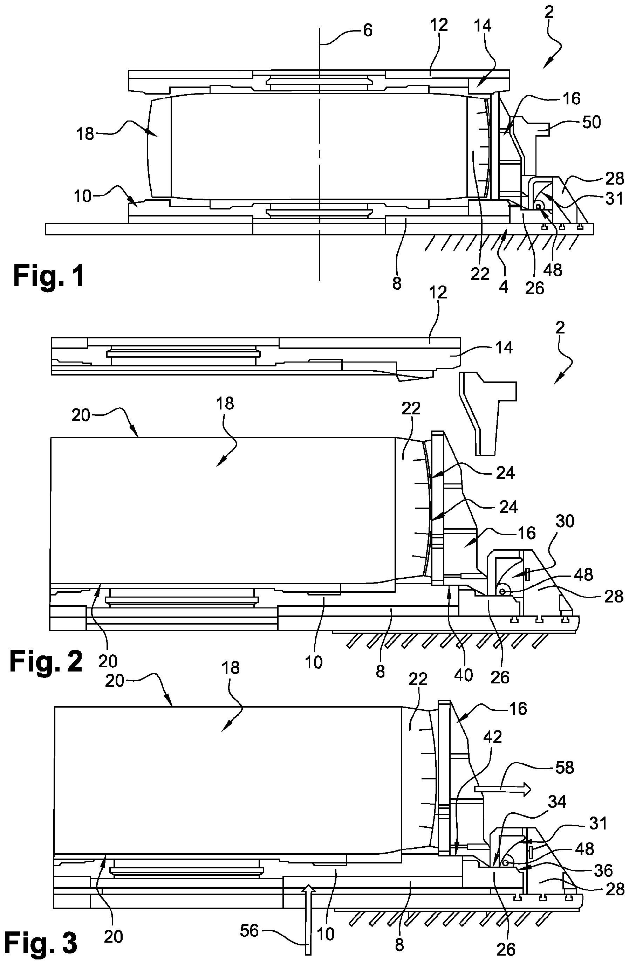

Nous allons maintenant présenter l'utilisation de la presse qui vient d'être décrite au cours d'un cycle de cuisson à l'appui des figures 1 à 12.

Sur la figure 1, la presse et le moule sont fermés, la coquille inférieure et la coquille supérieure occupant leurs positions les plus basses et les secteurs 16 occupant leurs positions les plus proches de l'axe 6. Il s'agit de la position servant à la cuisson d'une ébauche de pneumatique 18. La chape 26 est en contact avec le bâti 4 et le suiveur 48 est en appui direct à la fois contre la rampe supérieure 31 et le tronçon horizontal 34 de la rampe de la chape sur laquelle il repose. Le suiveur occupe lui aussi sa position la plus proche de l'axe 6. Une couronne périphérique 50 solidaire de la coquille supérieure assure par effet de coin, en appui sur les bords circonférentiels des platines 46 des secteurs, le serrage radial de ces derniers en direction de l'axe 6.

A l'étape suivante illustrée à la figure 2, on ouvre la presse en faisant coulisser la coquille et le plateau supérieurs et la couronne 50 vers le haut. Les secteurs 16 occupent toujours la même position par rapport au bâti et à la coquille inférieure.

A l'étape suivante illustrée à la figure 3, on commande le coulissement vers le haut de la coquille et du plateau inférieurs 8 et 10 par rapport au bâti suivant la flèche 56. Ce coulissement est aussi celui de la chape 26 qui déplace donc vers le haut le suiveur 48, lequel est contraint de suivre la rampe supérieure 31 qui est immobile. Ainsi sollicitée par les deux rampes, le suiveur coulisse par rapport au plateau suivant la flèche 58 en direction radiale horizontale en direction opposée à l'axe 6, le secteur 16 suivant le même mouvement tout en reposant sur la face supérieure 42 de la coquille. Ainsi s'amorce le coulissement radial des secteurs qui s'éloignent du pneumatique pour le démoulage de la bande de roulement.

En référence aux figures 4 et 5, les mêmes mouvements se poursuivent de sorte que la coquille inférieure est de plus en plus haute et les secteurs 16 de plus en plus éloignés de l'axe en direction radiale. Au cours de ce mouvement, le suiveur 48 continue à suivre les deux rampes 31 et 34. À la figure 5, les secteurs sont tout à fait dégagés des sculptures de la bande de roulement et le suiveur se situe à l'extrémité du tronçon horizontal 34 de la rampe de la chape la plus éloignée de l'axe 6. De la figure 4 à la figure 5, la vitesse du coulissement augmente en raison de la forme concave de la rampe 31.

En référence à la figure 6, la poursuite du coulissement vers le haut de la coquille inférieure provoque par gravité la chute du suiveur 48 sur le tronçon incliné 36 de la rampe de la chape et en appui contre le bord vertical distal de l'ouverture de la cale. Cette descente du suiveur entraîne le basculement du secteur 16 en appui contre le bord 44 de la coquille autour d'un axe 52 tangent à ce bord, suivant la flèche 60. L'amplitude de ce basculement est limitée par la fin de course du suiveur dans l'ouverture 30.

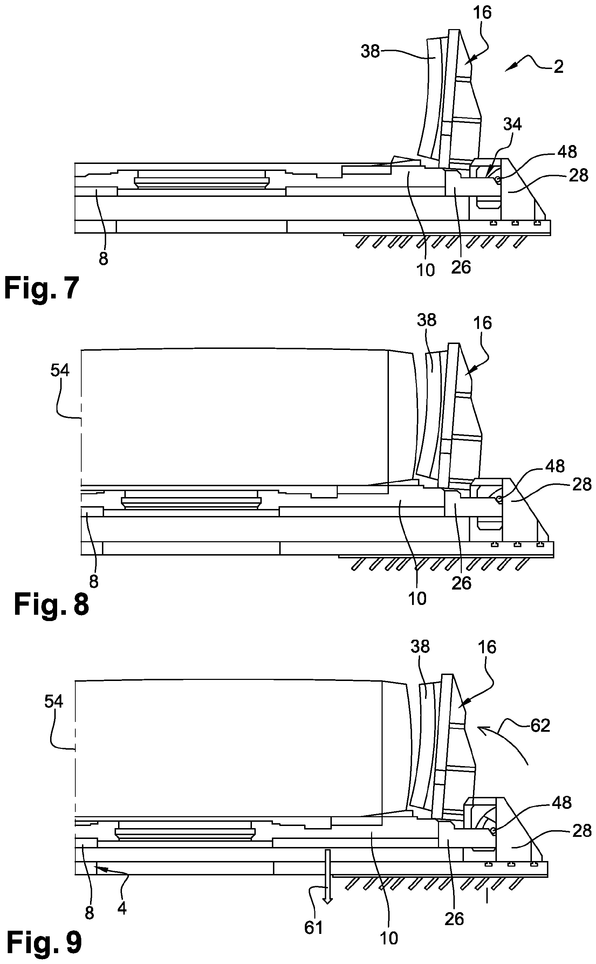

En référence à la figure 7, ce basculement ayant totalement dégagé le pneumatique, celui-ci est extrait de la presse.

En référence à la figure 8, la presse est alors prête à recevoir une ébauche 54 de pneumatique destinée à être vulcanisée. Cette ébauche comprend notamment de la gomme crue qu'il va s'agir de cuire. On dispose l'ébauche 54 sur la coquille inférieure.

En référence à la figure 9, on débute alors les opérations de fermeture de la presse. Pour cela, on fait coulisser la coquille inférieure 10 vers le bas par rapport au bâti suivant la flèche 61. Le suiveur 48 étant toujours en appui contre la rampe 36 et le bord de l'ouverture 30, cette descente provoque le basculement progressif de chaque secteur 16 en direction de l'axe 6 en vue de son redressement, suivant la flèche 62. Au cours de ce mouvement de descente et de basculement, chaque secteur demeure en appui continu contre le bord 44 du plateau.

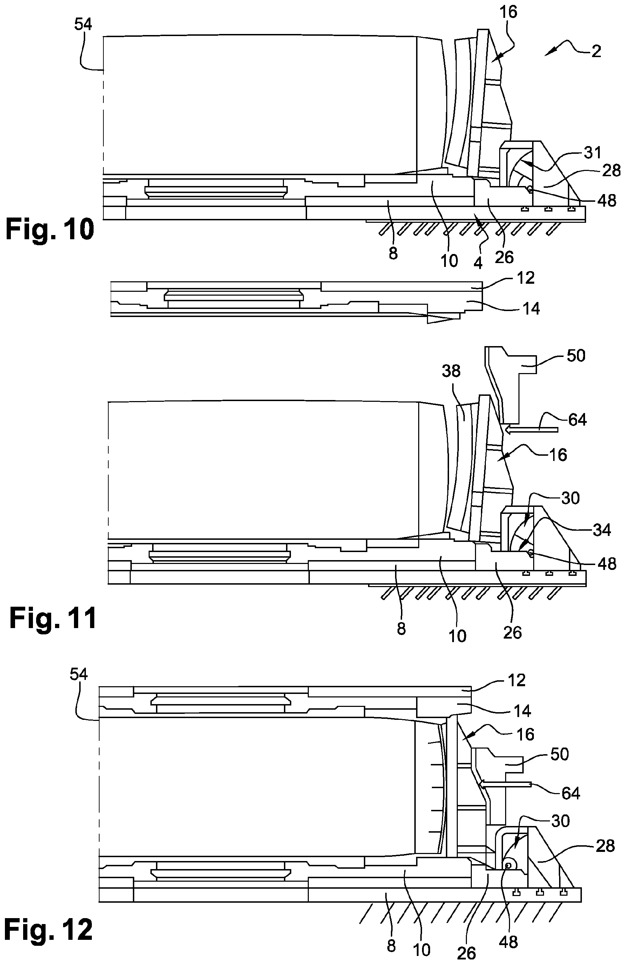

En référence à la figure 10, la coquille a atteint sa position la plus basse. Le suiveur 48 est toujours en appui contre la rampe 36 de sorte que les secteurs occupent toujours une position légèrement basculée.

En référence à la figure 11, on commande ensuite la descente de la coquille supérieure 14 et de la couronne 50. Cette dernière vient en appui contre la face externe des secteurs de sorte qu'elle finit de les faire basculer et les fait coulisser en direction de l'axe et contre l'ébauche, suivant la direction de la flèche 64. Au cours de ce mouvement, le suiveur 48 remonte le long du tronçon 36 puis suit le tronçon 34 en direction de l'axe, sans être en contact avec la rampe 31. Chaque secteur est à nouveau en appui contre la face supérieure 42 du plateau.

La fin de ce mouvement est illustrée à la figure 12. La presse est à nouveau fermée et se retrouve dans la configuration de la figure 1.

Tous les mouvements des secteurs se produisent de cette façon et simultanément. On observe notamment que la rampe 31 et le tronçon horizontal 34 de la rampe de la chape sont agencés pour faire coulisser le secteur par rapport au plateau sous l'effet du coulissement du plateau. De même, la rampe 31 et le tronçon incliné 36 de la rampe de la chape sont agencés pour faire basculer le secteur par rapport au plateau à l'issue du coulissement du secteur vers l'extérieur. De plus, le tronçon incliné 36 de la rampe de la chape est agencé de sorte que le secteur est en appui direct sur la rampe lors d'une descente du plateau, pour l'accompagnement de la descente du secteur.

On observe également qu'il n'est pas nécessaire de prévoir d'articulation ou de levier entre les secteurs, le bâti et la coquille inférieure.

Ce moule est particulièrement bien adapté pour le démoulage de pneumatiques de génie civil, en particulier celles qui comprennent de nombreuses rainures fines, profondes et/ou de formes complexes. Il procure en effet une longue course radiale du secteur lors du démoulage avec un basculement retardé au maximum. Cet agencement diminue les efforts de démoulage liés à l'obstruction de la gomme sur le moule. Il limite les efforts de fonctionnement et les problématiques d'usure.

Dans ce mode de réalisation, les cales 28 sont vissées sur le bâti et donc remplaçables par des cales dans lesquelles la rampe supérieure 31 présente une autre configuration. Cela modifie la trajectoire du secteur et/ou sa vitesse. On peut donc adapter la presse à différents modèles de pneumatiques.

Bien entendu, on pourra apporter à l'invention de nombreuses modifications sans sortir du cadre de celle-ci. On pourra notamment modifier la forme et l'agencement des rampes. Ainsi le tronçon 34 ici décrit comme rectiligne ne le sera pas nécessairement tandis que la rampe décrite comme incurvée pourra être rectiligne. Même si le coulissement initial du secteur lors de l'ouverture du moule est avantageux, on peut prévoir que ce mouvement est en fait un léger basculement.

## Revendications

1. Presse (2) de cuisson d'une ébauche (54) de pneumatique, la presse étant **caractérisée en ce qu'**elle comporte :
- un bâti (4) comprenant des rampes (31),
- un plateau supérieur,
- un plateau inférieur (8) portant une coquille (10) apte à former un flanc (20) du pneumatique, le plateau inférieur étant monté coulissant par rapport au bâti et présentant des rampes (34, 36),
**caractérisé en ce que** la presse comprend plusieurs secteurs, chacun formant un solide rigide, répartis circonférentiellement (16), comprenant un suiveur (48), aptes à former une bande de roulement (22) du pneumatique et à être chacun en appui contre un bord (44) du plateau inférieur d'une part, et à être en appui direct contre une des rampes (34, 36) d'autre part grâce au suiveur (48), chaque secteur étant apte à être en appui, grâce au suiveur (48), à la fois contre une des rampes (34, 36) du plateau inférieur et une des rampes du bâti (31).

2. Presse selon la revendication précédente dans laquelle chaque rampe (34, 36) est agencée pour faire coulisser l'un des secteurs par rapport au plateau inférieur sous l'effet du coulissement du plateau inférieur.

3. Presse selon la revendication précédente dans laquelle chaque rampe (34, 36) est agencée pour faire basculer l'un des secteurs par rapport au plateau inférieur à l'issue du coulissement des secteurs.

4. Presse selon l'une quelconque des revendications précédentes, agencée de sorte que chaque secteur est en appui contre un bord (44) du plateau inférieur lors d'une descente du plateau inférieur.

5. Presse selon l'une quelconque des revendications précédentes dans laquelle chaque rampe (34, 36) est agencée de sorte que l'un des secteurs est en appui direct sur la rampe lors d'une descente du plateau inférieur.

6. Presse selon l'une quelconque des revendications précédentes dans laquelle chaque rampe présente un tronçon rectiligne horizontal (34) et un tronçon incliné (36) prolongeant le tronçon horizontal vers le bas en direction de l'extérieur de la presse.

7. Presse selon l'une quelconque des revendications précédentes dans laquelle chaque secteur est apte à être en appui direct contre une des rampes (31) du bâti.

8. Presse selon l'une quelconque des revendications précédentes dans laquelle chaque rampe (31) du bâti est incurvée.

9. Presse selon l'une quelconque des revendications précédentes dans laquelle chaque rampe (31) du bâti est concave.

10. Presse selon l'une quelconque des revendications précédentes dans laquelle, chaque rampe (31) du bâti étant une rampe supérieure, le bâti comprend en outre des rampes inférieures contre lesquelles les secteurs sont aptes à être en appui respectivement.

11. Presse selon l'une quelconque des revendications précédentes dans laquelle chaque secteur (16) est retenu prisonnier dans une ouverture (30) du bâti délimitée par une ou plusieurs des rampes.

## Patentansprüche

1. Presse (2) zum Vulkanisieren einer Reifenrohlings (54), wobei die Presse **dadurch gekennzeichnet ist, dass** sie Folgendes aufweist:
- einen Rahmen (4) mit Rampen (31),
- eine obere Platte,
- eine untere Platte (8), die eine Schale (10) trägt, die geeignet ist, eine Seitenwand (20) des Reifens auszubilden, wobei die untere Platte relativ zum Rahmen gleitend montiert ist und Rampen (34, 36) aufweist, **dadurch gekennzeichnet, dass** die Presse mehrere Sektoren (16) umfasst, die jeweils einen starren Festkörper ausbilden, die in Umfangsrichtung verteilt sind, die einen Mitläufer umfassen (48) und die geeignet sind, einen Laufstreifen (22) des Reifens auszubilden und jeweils einerseits an einer Kante (44) der unteren Platte anzuliegen und andererseits dank dem Mitläufer (48) direkt an einer der Rampen (34, 36) anzuliegen, wobei jeder Sektor in der Lage ist, dank dem Mitläufer (48) sowohl an einer der Rampen (34, 36) der unteren Platte als auch einer der Rampen des Rahmens (31) anzuliegen.

2. Presse nach dem vorangehenden Anspruch, wobei jede Rampe (34, 36) angeordnet ist, um unter der Wirkung der Verschiebung der untere Platte einen der Sektoren relativ zur unteren Platte zu verschieben.

3. Presse nach dem vorangehenden Anspruch, wobei jede Rampe (34, 36) angeordnet ist, um nach dem Verschieben der Sektoren einen der Sektoren relativ zur unteren Platte zu kippen.

4. Presse nach einem der vorangehenden Ansprüche, die so angeordnet ist, dass jeder Sektor bei einem Absenken der unteren Platte an einer Kante (44) der unteren Platte anliegt.

5. Presse nach einem der vorangehenden Ansprüche, wobei jede Rampe (34, 36) so angeordnet ist, dass bei einem Absenken der unteren Platte einer der Sektoren in direkter Anlage mit der Rampe steht.

6. Presse nach einem der vorangehenden Ansprüche, wobei jede Rampe einen geradlinigen horizontalen Abschnitt (34) und einen geneigten Abschnitt (36), der den horizontalen Abschnitt nach unten zur Außenseite der Presse hin verlängert, aufweist.

7. Presse nach einem der vorangehenden Ansprüche, wobei jeder Sektor in der Lage ist, in direkter Anlage mit einer der Rampen (31) des Rahmens zu stehen.

8. Presse nach einem der vorangehenden Ansprüche, wobei jede Rampe (31) des Rahmens gekrümmt ist.

9. Presse nach einem der vorangehenden Ansprüche, wobei jede Rampe (31) des Rahmens konkav ist.

10. Presse nach einem der vorangehenden Ansprüche, wobei jede Rampe (31) des Rahmens eine obere Rampe ist, wobei der Rahmen ferner untere Rampen umfasst, an denen die Sektoren jeweils anliegen können.

11. Presse nach einem der vorangehenden Ansprüche, wobei jeder Sektor (16) in einer Öffnung (30) des Rahmens, die durch eine oder mehrere der Rampen begrenzt ist, eingeschlossen ist.

## Claims

1. Curing press (2) for a tyre blank (54), the press being **characterized in that** it comprises:
- a frame (4) comprising ramps (31),
- an upper platen,
- a lower platen (8) bearing a shell (10) capable of forming a side wall (20) of the tyre, the lower platen being mounted to slide with respect to the frame and having ramps (34, 36),
**characterized in that** the press comprises several segments, each forming a rigid solid, distributed circumferentially (16), comprising a follower (48), capable of forming a tread (22) of the tyre and of each bearing against an edge (44) of the lower platen on the one hand, and of bearing directly against one of the ramps (34, 36) on the other hand by virtue of the follower (48), each segment being able to bear, by virtue of the follower (48), both against one of the ramps (34, 36) of the lower platen and one of the ramps of the frame (31).

2. Press according to the preceding claim, wherein each ramp (34, 36) is arranged to slide one of the segments with respect to the lower platen under the effect of the sliding of the lower platen.

3. Press according to the preceding claim, wherein each ramp (34, 36) is arranged to tilt one of the segments with respect to the lower platen at the end of the sliding of the segments.

4. Press according to any one of the preceding claims, arranged so that each segment bears against an edge (44) of the lower platen upon a lowering of the lower platen.

5. Press according to any one of the preceding claims, wherein each ramp (34, 36) is arranged so that one of the segments bears directly on the ramp upon a lowering of the lower platen.

6. Press according to any one of the preceding claims, wherein each ramp has a horizontal rectilinear section (34) and an inclined section (36) extending the horizontal section downward toward the outside of the press.

7. Press according to any one of the preceding claims, wherein each segment is capable of bearing directly against one of the ramps (31) of the frame.

8. Press according to any one of the preceding claims, wherein each ramp (34) of the frame is dished.

9. Press according to any one of the preceding claims, wherein each ramp (31) of the frame is concave.

10. Press according to any one of the preceding claims, wherein each ramp (31) of the frame being an upper ramp, the frame further comprises lower ramps against which the segments can bear respectively.

11. Press according to any one of the preceding claims, wherein each segment (16) is held captive in an opening (30) of the frame delimited by one or more of the ramps.
